# EUROPÄISCHE PATENTSCHRIFT

(11) **EP 2 753 511 B1**
(45) Veröffentlichungstag und Bekanntmachung des Hinweises auf die Patenterteilung: **15.11.2017**
(21) Anmeldenummer: 12756723.8
(22) Anmeldetag: 07.09.2012
(51) Int. Cl.: B60T 8/17

(54) **KRAFTSCHLUSSERMITTLUNG BEI EINEM SCHIENENFAHRZEUG**
ADHESION DETECTION IN A RAIL VEHICLE
DÉTERMINATION DE L'ADHÉRENCE D'UN VÉHICULE FERROVIAIRE

(30) Priorität: 09.09.2011 DE 102011112968
(43) Veröffentlichungstag der Anmeldung: 16.07.2014
(73) Patentinhaber: KNORR-BREMSE Systeme für Schienenfahrzeuge GmbH, 80809 München (DE)
(72) Erfinder: RASEL, Thomas, 85635 Höhenkirchen-Siegertsbrunn (DE); HERDEN, Marc-Oliver, 81377 München (DE)
(86) Internationale Anmeldenummer: PCT/EP2012/067555
(87) Internationale Veröffentlichungsnummer: WO 2013/034723

(56) Entgegenhaltungen:
- WO-A1-03/074337
- DE-A1-102007 019 697
- US-A- 2 496 405

## Beschreibung

Die vorliegende Erfindung betrifft eine Steuereinrichtung für ein Schienenfahrzeug, die zum Ermitteln eines Kraftschlusses zwischen mindestens einem Rad und einer Schiene ausgebildet ist. Die Erfindung betrifft außerdem ein Schienenfahrzeug mit einer solchen Steuereinrichtung und ein Verfahren zum Ermitteln eines Kraftschlusses zwischen mindestens einem Rad eines Schienenfahrzeugs und einer Schiene.

Bei Schienenfahrzeugen werden das Brems- und Beschleunigungsverhalten stark über einen Kraftschluss zwischen Rad und Schiene beeinflusst. Dieser Kraftschluss ist in der Regel von Schienenbedingungen abhängig, beispielsweise von dem Vorhandensein einer Zwischenschicht zwischen Rad und Schiene. Auch weitere Parameter wie beispielsweise eine Fahrtgeschwindigkeit des Schienenfahrzeugs und ein Radschlupf beeinflussen den Kraftschluss. Der Kraftschluss bestimmt, wie viel Kraft zum Bremsen über den Kontakt zwischen Rad und Schiene aufgenommen werden kann. Somit ist es insbesondere während einer Bremsung vorteilhaft, den Kraftschluss zu kennen. Wird mehr Kraft zum Bremsen eines Rades aufgebracht, als über den Kraftschluss aufgenommen werden kann, kann dies dazu führen, dass die Räder ins Gleiten oder Blockieren geraten.

Das Dokument DE 199 58 221 A1 beschreibt ein Verfahren zur Verhinderung des Umkippens eines Fahrzeugs, insbesondere eines Nutzfahrzeugs, bei welchem mit Sensoren Luftfederbalgdrücke und gleichzeitig mit einem Querbeschleunigungssensor oder über Raddrehzahl-Sensoren die Querbeschleunigung des Fahrzeugs erfasst werden. Basierend auf diesen Größen kann die Geschwindigkeit des Fahrzeugs durch Fahrerwarnung, eine automatische Motordrosselung oder eine automatische Einbremsung verringert werden, um ein Umkippen zu verhindern. Das Dokument WO 03/074337 A1 offenbart eine Steuereinrichtung für ein Straßenfahrzeug, die zum Empfang einer Querbeschleunigung mit einem Sensor verbunden sein kann und die basierend auf der empfangenen Querbeschleunigung eine Kraftschlussausnutzung in Querrichtung zwischen mindestens einem Rad und einer Straße ermitteln kann.

Eine Aufgabe der Erfindung besteht darin, eine Kraftschlussermittlung zwischen einem Rad eines Schienenfahrzeugs und der Schiene auf möglichst einfache Weise zu ermöglichen.

Diese Aufgabe wird durch die Merkmale der unabhängigen Ansprüche gelöst.

Weitere vorteilhafte Ausgestaltungen und Weiterbildungen der Erfindung ergeben sich aus den abhängigen Ansprüchen.

Im Rahmen dieser Beschreibung kann ein Schienenfahrzeug ein oder mehrere Wagen mit oder ohne Antrieb und/oder ein Zugfahrzeug in beliebiger Kombination bezeichnen. Insbesondere kann ein Schienenfahrzeug Triebwagen aufweisen. Ein Schienenfahrzeug oder ein Wagen des Schienenfahrzeugs kann Drehgestelle aufweisen, an denen Radachsen des Fahrzeugs angeordnet sind. Die Drehgestelle können an einem Wagenaufbau befestigt sein. Es ist auch vorstellbar, dass ein Wagen mindestens einen Wagenkasten aufweist. Auf einem Drehgestell können ein oder zwei Wagenkasten angebracht sein. Es ist vorstellbar, dass jeweils zwei Wagenkasten mechanisch beweglich miteinander verbunden sind. Eine Radachse kann zur Aufhängung eines einzelnen Rades vorgesehen sein oder zwei Räder starr miteinander verbinden. Eine Steuereinrichtung kann dazu ausgebildet sein, Daten zu empfangen, die eine bestimmte Größe und/oder einen bestimmten Zustand repräsentieren. Es ist vorstellbar, dass derartige Daten einen bestimmten Zustand oder eine bestimmte Größe direkt angeben. Es kann auch vorgesehen sein, dass basierend auf derartigen einen Zustand und/oder eine Größe repräsentierenden oder angebenden Daten der jeweilige Zustand oder die jeweilige Größe ermittelbar ist. Ein entsprechendes Bestimmen oder Ermitteln der Größe oder des Zustands kann etwa durch Bearbeitungen oder Berechnungen basierend auf den zugehörigen Daten durchgeführt werden. Derartige Berechnungen oder Bearbeitungen können durch eine Steuereinrichtung durchgeführt werden und können beispielsweise Datenformatsänderungen, Transformationen und/oder physikalische Berechnungen umfassen. Eine Steuereinrichtung kann entsprechend zum Ermitteln einer Größe oder eines Zustands basierend auf entsprechenden Daten ausgebildet sein.

Erfindungsgemäß ist eine Steuereinrichtung für ein Schienenfahrzeug vorgesehen, die zum Empfang von Querbewegungsdaten verbunden oder verbindbar ist. Die Steuereinrichtung ist dazu ausgebildet, basierend auf empfangenen Querbewegungsdaten einen Kraftschluss zwischen mindestens einem Rad und einer Schiene zu ermitteln. Die Erfindung basiert auf der Erkenntnis, dass ein Kraftschluss sich nicht nur auf das Radverhalten in Fahrtrichtung auswirkt, sondern auch Querbewegungen und Querbeschleunigungen insbesondere von Rädern betrifft. Die Räder können sich dabei mit ihrer Lauffläche über die Schienenoberfläche auch in einer Querrichtung bewegen oder rutschen, wodurch sich ein Kraftschluss auch auf entsprechende Querbewegungen auswirken kann. Querbewegungsdaten können entsprechende Querbeschleunigungen und/oder Querkräfte und/oder Querbewegungen repräsentieren. Querbewegungsdaten können insbesondere Querbeschleunigungen von Rädern repräsentieren. Somit kann basierend auf Querbewegungsdaten ein Kraftschluss mindestens eines Rades ermittelt werden. Die Steuereinrichtung kann eine elektronische Steuereinrichtung sein. Es kann insbesondere vorgesehen sein, dass die Steuereinrichtung ein Zugrechner, ein Bremsrechner, ein Gleitschutzrechner oder ein Traktionsrechner ist. Die Steuereinrichtung kann mehrere Komponenten umfassen Es kann beispielsweise vorgesehen sein, dass die Steuereinrichtung mehrere Steuergeräte aufweist, die miteinander zur Datenübertragung verbunden sein können. Insbesondere kann die Steuereinrichtung mehrere Bremsrechner umfassen. Querbewegungsdaten können allgemein Bewegungen und/oder Querschwingungen einer Komponente des Schienenfahrzeugs und/oder zwischen unterschiedlichen Teilen oder Komponenten des Schienenfahrzeugs betreffen, insbesondere Schwingungen oder Bewegungen mit einer zu einem lokalen Schienenverlauf orthogonalen Komponente. Als Komponenten des Schienenfahrzeugs können insbesondere Drehgestelle, Räder, Radachsen und/oder Wagenkasten angesehen werden. Es kann vorgesehen sein, dass Querbewegungsdaten einem oder mehreren Rädern zugeordnet sind, beispielsweise den Rädern einer Radachse und/oder den Rädern eines Drehgestells. Insbesondere kann die Steuereinrichtung dazu ausgebildet sein, Querbewegungsdaten bezüglich mindestens einer jeweils einem Rad und/oder einem Drehgestell zugeordneter Komponente zur Ermittlung eines Kraftschlusses für das jeweilige Rad und/oder die Räder des jeweiligen Drehgestells zu verwenden. So kann beispielsweise die Steuereinrichtung dazu ausgebildet sein, basierend auf Querbewegungsdaten bezüglich auf einem gemeinsamen Drehgestell angeordneter Wagenkasten den Kraftschluss für Räder zu ermitteln, die an dem gemeinsamen Drehgestell angebracht sind. Die Schwingungen können mechanische Schwingungen sein. Es ist vorstellbar, dass die Schwingungen transiente Schwingungen sind. Mit einer Querbewegung und/oder Querschwingung können Radbewegungen auf der Schiene mit einer zur Fahrtrichtung orthogonalen Komponente einhergehen. Es ist vorstellbar, dass Querbewegungsdaten Querbewegungen und/oder Querschwingungen repräsentieren, die eine solche zur Fahrtrichtung orthogonale Komponente aufweisen. Querbewegungsdaten können beispielsweise Querbewegungen und/oder Querschwingungen von Komponenten des Schienenfahrzeugs wie Drehgestellen und/oder Wagenkästen und/oder Radachsen untereinander oder relativ zueinander betreffen. Derartige Querschwingungen können beispielsweise als Gieren oder gegenphasiges Wanken entsprechender Komponenten in Erscheinung treten, etwa wenn sich ein Drehgestell oder ein Wagenkasten gegenüber einem anderen Drehgestell oder Wagenkasten in einer Querrichtung bewegt. Allgemein kann vorgesehen sein, dass die Steuereinrichtung zum Empfang von Daten mit einer oder mehreren Sensoreinrichtungen und/oder Steuereinrichtungen verbunden ist. Es ist vorstellbar, dass eine Sensoreinrichtung einen oder mehrere Sensoren aufweist. Eine Sensoreinrichtung kann selbst eine oder mehrere Sensorsteuereinrichtungen aufweisen, um aus Messwerten Daten zu ermitteln, welche an die Steuereinrichtung übertragbar sind. Das Ermitteln einer Größe, beispielsweise des Kraftschlusses, kann das Durchführen von mathematischen Berechnungen und/oder Transformationen basierend auf Daten umfassen. Diese Daten können Querbewegungsdaten umfassen. Es kann vorgesehen sein, dass eine Sensoreinrichtung als Teil der Steuereinrichtung ausgebildet ist. Die Sensoreinrichtung kann geeignete Sensoren aufweisen, um Querbeschleunigungen, Querkräfte und/oder Querschwingungen einzelner Komponenten und/oder zwischen Komponenten des Schienenfahrzeugs zu erfassen und als Querbewegungsdaten bereitzustellen. Allgemein können Querbewegungsdaten Querkräfte, Querbeschleunigungen und/oder Querbewegungen einzelner Komponenten und/oder mehrerer Komponenten des Schienenfahrzeugs untereinander repräsentieren. Querbewegungsdaten können insbesondere mechanisch miteinander gekoppelte Komponenten betreffen, die zumindest in einer Richtung quer zur Fahrtrichtung nicht starr miteinander verbunden sind, so dass sie relativ zueinander Querbewegungen auszuführen vermögen. Diese Komponenten des Schienenfahrzeugs können jeweils mechanisch mit einem Drehgestell und/oder einer Radachse gekoppelt sein. Insbesondere können Querbewegungsdaten Komponenten betreffen, die an einem gemeinsamen Drehgestell angebracht sind. Derartige Komponenten können beispielsweise auf einem gemeinsamen Drehgestell vorgesehene Wagenkasten sein. Es ist vorstellbar, dass die Steuereinrichtung es vermag, einen ermittelten Kraftschluss für eine Ansteuerung des Fahrzeugs bereitzustellen und/oder zu verwenden. Insbesondere kann vorgesehen sein, dass es die Steuereinrichtung vermag, eine Beschleunigung und/oder Bremsung basierend auf einem ermittelten Kraftschluss anzusteuern und/oder Kraftschlussdaten an eine Bremssteuereinrichtung und/oder Antriebssteuereinrichtung zu übertragen. Die Steuereinrichtung kann dazu ausgebildet sein, einen Kraftschluss während einer Fahrt zu ermitteln, insbesondere im Wesentlichen in Echtzeit. Es ist vorstellbar, dass die Steuereinrichtung es vermag, beim Ermitteln des Kraftschlusses ein Modell des Schienenfahrzeugs und/oder einer oder mehrerer Komponenten des Schienenfahrzeugs zu berücksichtigen. Ein solches Modell kann basierend auf experimentellen und/oder theoretischen und/oder simulierten Daten erstellt sein. Es ist vorstellbar, dass ein Modell in einer Speichereinrichtung der Steuereinrichtung gespeichert ist. Das Modell kann in Form einer Wertetabelle abgespeichert sein. Es kann vorgesehen sein, dass die Steuereinrichtung dazu ausgebildet ist, jeweils für einzelne Räder und/oder Radachsen des Fahrzeugs einen Kraftschluss zu bestimmen. Es ist auch vorstellbar, dass Räder und/oder Radachsen zu Gruppen zusammengefasst sind, für welche die Steuereinrichtung einen gemeinsamen Kraftschlusswert zu bestimmen vermag. Beispielsweise können die Räder und/oder Radachsen eines Drehgestells gemeinsam gruppiert sein. Es ist vorstellbar, die die Steuereinrichtung mit einer Sensoreinrichtung verbunden oder verbindbar ist, welche es vermag, für einzelnen Räder und/oder Radachsen und/oder Drehgestellen zugeordneten Komponenten Querbewegungsdaten zu ermitteln und der Steuereinrichtung zu übermitteln. Datenübertragungsverbindungen zwischen der Steuereinrichtung und einer Sensoreinrichtung und/oder anderen Steuereinrichtungen können kabelgebunden und/oder Funkverbindungen sein.

Es ist vorgesehen, dass die Steuereinrichtung zum Empfang von Querbewegungsdaten mit einer Sensoreinrichtung verbunden oder verbindbar ist, welche mindestens einer Schlingerdämpfungseinrichtung des Schienenfahrzeugs zugeordnet ist. Üblicherweise weisen Schlingerdämpfungseinrichtungen einen oder mehrere Schlingerdämpfer auf. Der Schlingerdämpfungseinrichtung ist häufig eine Sensoreinrichtung zugeordnet, welche es vermag, Schlingerdämpfer der Schlingerdämpfungseinrichtung zu überwachen. Schlingerdämpfer können dazu vorgesehen sein, Komponenten des Schienenfahrzeugs miteinander mechanisch zu koppeln. Derartige Schlingerdämpfer sind dazu ausgebildet, Querbewegungen von über den Schlingerdämpfer miteinander gekoppelten Komponenten eines Schienenfahrzeugs zu dämpfen. Somit kann die Sensoreinrichtung dazu ausgebildet sein, das Schlingern zwischen zwei Komponenten des Schienenfahrzeugs zu überwachen. Basierend auf einem erfassten Schlingern kann die Sensoreinrichtung Querbewegungsdaten bereitstellen, die zur Ermittlung des Kraftschlusses weiterverwendet werden können. Schlingerdämpfer einer Schlingerdämpfereinrichtung können insbesondere zwischen Komponenten des Fahrzeugs, beispielsweise benachbarten Komponenten wie etwa benachbarten Wagenkästen und/oder einem Wagenkasten und einem benachbarten Drehgestell vorgesehen sein, um die Querschwingungen und Querbewegungen zwischen diesen Komponenten zu dämpfen. Die Komponenten können zumindest teilweise auf einem gemeinsamen Drehgestell angeordnet sein. Es ist vorstellbar, dass ein Schlingerdämpfer dazu ausgebildet ist, die Querschwingungen und Querbewegungen zwischen einem Drehgestell und einem Wagenkasten zu dämpfen und entsprechend zwischen diesen Komponenten angeordnet und/oder an diesen Komponenten befestigt ist. Es können insbesondere auf einem gemeinsamen Drehgestell angeordnete oder befestigte Wagenkasten über mindestens einen Schlingerdämpfer mechanisch gekoppelt sein. Schlingerdämpfer können insbesondere hydraulische Dämpfer sein. Eine Sensoreinrichtung, welche einer Schlingerdämpfungseinrichtung zugeordnet ist, kann ein oder mehrere Sensoren aufweisen. Derartige Sensoren können zur Überwachung des Verhaltens der Schlingerdämpfer der Schlingerdämpfereinrichtung ausgebildet sein. Insbesondere können Sensoren einer derartigen Sensoreinrichtung dazu ausgebildet sein, die auf einzelne Schlingerdämpfer ausgeübten Kräfte während einer Fahrt und/oder auftretende Beschleunigungen und/oder auftretende Bewegungen zu überwachen und als Querbewegungsdaten bereitzustellen. Dabei kann beispielsweise vorgesehen sein, dass die Sensoreinrichtung es vermag, die Bewegung gegeneinander beweglicher Komponenten mindestens eines Schlingerdämpfers zu überwachen.

Die Sensoreinrichtung kann Sensoren aufweisen, welche Querbewegungsdaten bezüglich einer relativen Querbewegung von Wagenkasten und/oder Drehgestellen des Schienenfahrzeugs bereitzustellen vermögen. Insbesondere kann sich eine relative Querbewegung auf benachbarte Wagenkästen und/oder Drehgestelle des Schienenfahrzeugs beziehen. Die Wagenkasten und/oder Drehgestelle können durch mindestens einen Schlingerdämpfer miteinander gekoppelt sein.

Bei einer Weiterbildung kann vorgesehen sein, dass die Steuereinrichtung dazu ausgebildet ist, den Kraftschluss basierend auf mindestens einem weiteren Parameter zu ermitteln. Somit kann die Ermittlung des Kraftschlusses verbessert werden. Es ist vorstellbar, dass eine Steuereinrichtung zum Empfang von Daten ausgebildet ist, welche den mindestens einen weiteren Parameter repräsentieren. Der mindestens eine weitere Parameter kann beispielsweise durch geeignete Sensoreinrichtungen oder Steuereinrichtungen bereitgestellt sein. Der mindestens eine weitere Parameter kann beispielsweise einen Radschlupf umfassen, der beispielsweise basierend auf eine Raddrehzahl repräsentierenden Daten ermittelbar sein kann.

Insbesondere kann der mindestens eine weitere Parameter einen Kurvenradius umfassen. Der Kurvenradius kann insbesondere eine Kurve betreffen, die gerade durch das Schienenfahrzeug durchfahren wird. Zum Bestimmen eines Kurvenradius können beispielsweise Streckendaten, Sensordaten bezüglich einer Neigung und/oder Querbeschleunigung oder ähnliche Daten dienen. Es kann eine Sensoreinrichtung vorgesehen sein, welche es vermag, eine Neigung des Schienenfahrzeugs und/oder einer Komponente des Schienenfahrzeugs zu erfassen und entsprechende Daten, welche die Neigung repräsentieren, der Steuereinrichtung zu übermitteln. Die Neigungsdaten können als einen weiteren Parameter repräsentierende Daten angesehen werden. Somit kann berücksichtigt werden, dass während einer Kurvenfahrt Querbewegungen und Querkräfte auftreten können, die nicht direkt kraftschlussabhängig sind. Es ist vorstellbar, dass die Steuereinrichtung dazu ausgebildet ist, durch eine Neigung während einer Kurvenfahrt verursachte Querbewegungen, Querbeschleunigungen und/oder Querkräfte bei dem Ermitteln des Kraftschlusses zu berücksichtigen.

Der mindestens eine weitere Parameter kann eine Fahrzeuggeschwindigkeit umfassen. Somit kann die Fahrzeuggeschwindigkeit, welche Auswirkungen auf einen Kraftschluss haben kann, bei der Bestimmung des Kraftschlusses berücksichtigt werden. Es ist vorstellbar, dass die Steuereinrichtung mit einer Sensoreinrichtung zur Erfassung und/oder Übermittlung von Fahrzeuggeschwindigkeitsdaten verbunden oder verbindbar ist. Einer derartige Sensoreinrichtung kann beispielsweise zum Empfang von Satellitendaten wie GPS-Daten geeignet sein und/oder basierend auf Radardaten und/oder Raddrehzahldaten eine Fahrzeuggeschwindigkeit repräsentierende Daten zu erfassen und bereitzustellen vermögen.

Bei einer Weiterbildung kann vorgesehen sein, dass die Steuereinrichtung zum Empfang von Radlagerdaten ausgebildet ist. Dazu kann die Steuereinrichtung beispielsweise mit einer Radlagersensoreinrichtung verbunden oder verbindbar sein. Es kann vorgesehen sein, dass die Steuereinrichtung den Kraftschluss basierend auf Radlagerdaten berechnet. Radlagerdaten können beispielsweise eine während einer Fahrt auftretende Beschleunigung an einem Radlager und/oder eine während einer Fahrt auf ein oder mehrere Radlager ausgeübte Kräfte betreffen, insbesondere Querkräfte und/oder Querbeschleunigungen. Die Radlagerdaten können somit bei der Ermittlung des Kraftschlusses zur Ergänzung der Querbewegungsdaten herangezogen werden.

Es kann vorgesehen sein, dass die Steuereinrichtung zum Empfang von Bremsdaten ausgebildet ist. Insbesondere kann die Steuereinrichtung mit einer Bremssensoreinrichtung verbunden oder verbindbar sein, welche entsprechende Bremsdaten zu liefern vermag. Eine Bremssensoreinrichtung kann insbesondere Bremskraftsensoren umfassen, welche es vermögen, die während einer Bremsung auf ein Rad ausgeübte Bremskraft und/oder ein entsprechendes Bremsmoment zu erfassen. Es ist auch vorstellbar, dass Bremsdaten eine Betätigungskraft repräsentieren, mit welcher eine Bremseinrichtung des Schienenfahrzeugs betätigt wird, insbesondere eine Reibbremseinrichtung. Derartige Betätigungskräfte und/oder Bremskräfte können dazu führen, dass ein Rad während der Bremsung in seinen Querbewegungen beeinflusst wird, insbesondere eingeschränkt wird. Somit können entsprechende Bremsdaten beim Ermitteln eines Kraftschlusses zur Ergänzung von Querbewegungsdaten herangezogen werden. Bremsdaten können alternativ oder zusätzlich einen während einer Bremsung ausgeübten Bremsdruck betreffen, der beispielsweise durch einen geeigneten Krafterzeuger in eine Betätigungskraft umsetzbar ist. Der Bremsdruck kann ein hydraulischer oder pneumatischer Bremsdruck sein. Es ist auch vorstellbar, dass elektrische Energie in eine Betätigungskraft umzusetzen vermag. In diesem Fall können Bremsdaten entsprechend Daten umfassen, welche den elektrischen Strom repräsentieren.

Die vorliegende Erfindung betrifft außerdem ein Schienenfahrzeug mit einer hierin beschriebenen Steuereinrichtung. Das Schienenfahrzeug kann eine oder mehrere der hierin beschriebenen Komponenten, Einrichtungen oder Merkmale aufweisen. Insbesondere kann das Schienenfahrzeug eine Schlingerdämpfungseinrichtung aufweisen, die mindestens einen Schlingerdämpfer umfassen kann. Ein Schlingerdämpfer kann dazu vorgesehen sein, Querschwingungen insbesondere zwischen zwei benachbarten Komponenten eines Schienenfahrzeugs zu dämpfen. Derartige Komponenten können beispielsweise Wagenkästen und/oder Drehgestelle sein. Einer Schlingerdämpfereinrichtung kann eine Sensoreinrichtung zugeordnet sein, um das Verhalten der Schlingerdämpfer zu überwachen. Es ist vorstellbar, dass eine derartige Sensoreinrichtung es vermag, insbesondere Querkräfte und/oder Querbeschleunigungen zwischen durch einen Schlingerdämpfer verbundenen Komponenten zu erfassen und entsprechende Daten bereitzustellen.

Außerdem betrifft die Erfindung ein Verfahren zum Bestimmen eines Kraftschlusses zwischen mindestens einem Rad eines Schienenfahrzeugs und einer Schiene mit den Schritten des Empfangens, durch eine Steuereinrichtung, von Querbewegungsdaten und des Ermittelns, durch die Steuereinrichtung, des Kraftschlusses basierend auf den empfangenen Querbewegungsdaten. Die Steuereinrichtung kann eine hierin beschriebene Steuereinrichtung sein. Es ist vorstellbar, dass das Schienenfahrzeug ein hierin beschriebenes Schienenfahrzeug ist. Die Steuereinrichtung kann mit einer Sensoreinrichtung verbunden werden, welche mindestens einer Schlingerdämpfungseinrichtung des Schienenfahrzeugs zugeordnet ist. Die Sensoreinrichtung kann Sensoren aufweisen, welche Querbewegungsdaten bezüglich einer relativen Querbewegung von Wagenkästen und/oder Drehgestellen des Schienenfahrzeugs bereitstellen. Der Kraftschluss kann basierend auf weiteren Parametern ermittelt werden. Die weiteren Parameter können beispielsweise einen Kurvenradius und/oder eine Fahrzeuggeschwindigkeit umfassen. Die Steuereinrichtung kann Radlagerdaten empfangen. Es ist vorstellbar, dass die Steuereinrichtung einen Kraftschluss basierend auf Radlagerdaten und/oder unter Berücksichtigung von Radlagerdaten ermittelt. Ferner kann die Steuereinrichtung Bremsdaten empfangen. Es kann vorgesehen sein, dass die Steuereinrichtung einen Kraftschluss basierend auf Bremsdaten und/oder unter Berücksichtigung von Bremsdaten ermittelt.

Die Erfindung wird nun mit Bezug auf die begleitenden Zeichnungen anhand bevorzugter Ausführungsformen beispielhaft erläutert.

Es zeigen:
- Figur 1: schematisch ein Beispiel für ein Schienenfahrzeug; und
- Figur 2: schematisch ein Flussdiagramm für ein Verfahren zum Ermitteln eines Kraftschlusses.

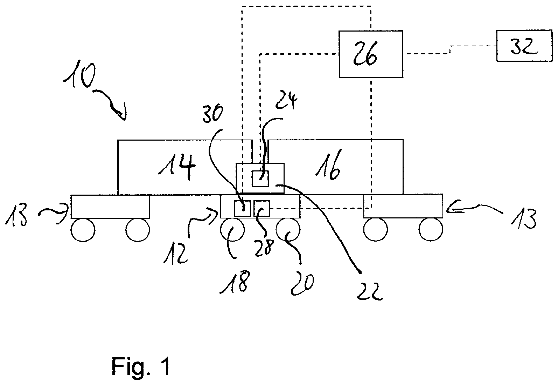

Figur 1 zeigt schematisch ein Schienenfahrzeug 10 mit einem Drehgestell 12. Auf dem Drehgestell 12 gelagert sind zwei Wagenkästen 14 und 16. Des Weiteren sind am Drehgestell 12 zwei Radachsen 18 und 20 angeordnet. Weitere Drehgestelle 13 können analog ausgebildet sein. In diesem Beispiel ist ein Schlingerdämpfer 22 einer Schlingerdämpfungseinrichtung vorgesehen, welcher ein Schlingern, also Querbewegungen und/oder Querbeschleunigungen zwischen den Wagenkästen 14 und 16 dämpft. Dazu ist in dieser Variante der Schlingerdämpfer 22 am Wagenkasten 14 und am Wagenkasten 16 befestigt. Der Schlingerdämpfer 22 umfasst mindestens einen hydraulischen Dämpfer. Zur Überwachung des Schlingerdämpfers 22 ist eine Sensoreinrichtung 24 vorgesehen. Die Sensoreinrichtung 24 vermag es, das Verhalten des Schlingerdämpfers zu erfassen. Dabei vermag es die Sensoreinrichtung 24 insbesondere, auf den Schlingerdämpfer 22 ausgeübte Kräfte und/oder Verschiebungen von Komponenten des Schlingerdämpfers gegeneinander zu erfassen. Die von der Sensoreinrichtung 24 ermittelten Daten können als Querbewegungsdaten angesehen werden. Es versteht sich, dass mehrere Wagenkästen vorgesehen sein können, die über Schlingerdämpfer der Schlingerdämpfungseinrichtung miteinander koppelbar sind. Die Sensoreinrichtung 24 kann entsprechend weitere Sensoren umfassen, um diese Schlingerdämpfer überwachen. Die Sensoreinrichtung 24 ist zur Datenübertragung mit einer Steuereinrichtung 26 verbunden. In der Figur 1 sind Verbindungen zur Datenübertragung gestrichelt dargestellt.

Derartige Verbindungen können kabelgebunden und/oder Funkverbindungen sein. Die Steuereinrichtung 26 ist zum Empfang von Querbewegungsdaten von der Sensoreinrichtung 24 ausgebildet. Die Querbewegungsdaten können jeweils einen Schlingerdämpfer 22 einer Schlingerdämpfungseinrichtung betreffen. Es versteht sich, dass alternativ oder zusätzlich zur Sensoreinrichtung zur Überwachung einer Schlingerdämpfungseinrichtung auch eine andere Sensoreinrichtung zum Erfassen und Übertragen von Querbewegungsdaten vorgesehen sein kann. Jeder Radachse 18, 20 oder jedem Drehgestell 12, 13 kann mindestens eine Bremseinrichtung zugeordnet sein, insbesondere eine Reibbremseinrichtung. Die Bremseinrichtung kann eine pneumatische oder hydraulische Bremseinrichtung sein, die es vermag, bei Anlegen eines Bremsdrucks einen reibenden Kontakt zwischen einer Reibkomponente eines Rades oder einer Radachse und einem Bremsbelag zu erzeugen. Der Bremseinrichtung ist in diesem Beispiel eine Bremssensoreinrichtung 28 zugeordnet, welche es vermag, eine Betätigungskraft und/oder eine Bremskraft zu messen, welche bei einer Bremsung auf ein Rad oder eine Radachse ausgeübt wird. Die Bremssensoreinrichtung 28 vermag es ferner, einen zur Erzeugung einer Bremskraft oder Betätigungskraft bereitgestellten Bremsdruck zu erfassen. Die Bremssensoreinrichtung 28 kann zur Übertragung entsprechender Bremsdaten an die Steuereinrichtung 26 ausgebildet sein. Ferner kann eine Radlagersensoreinrichtung 30 vorgesehen sein, welche Sensoren zur Überwachung von Radlagern aufweist. Die Radlager können insbesondere den Rädern der Radachsen an den Drehgestellen 12, 13 zugeordnet sein, beispielsweise der Radachsen 18, 20. Die Radlagersensoreinrichtung 30 ist dazu ausgebildet, Radlagerdaten zu erfassen und an die Steuereinrichtung 26 zu übermitteln. Die Radlagerdaten können insbesondere an den Radlagern auftretende Kräfte betreffen, beispielsweise Querkräfte. Die Sensoreinrichtung 26 ist dazu ausgebildet, basierend auf den von der Sensoreinrichtung 24 empfangenen Querbewegungsdaten einen Kraftschluss zu ermitteln, gegebenenfalls unter Berücksichtigung von Bremsdaten von der Bremssensoreinrichtung 28 und/oder Radlagerdaten von der Radlagersensoreinrichtung 30. Ferner ist die Steuereinrichtung 26 mit weiteren Sensoreinrichtungen und/oder Steuereinrichtungen 32 verbunden. Von diesen Einrichtungen 32 vermag die Steuereinrichtung 26 Daten zu empfangen, welche weitere Parameter für die Ermittlung des Kraftschlusses repräsentieren. Die weiteren Parameter können insbesondere eine Fahrzeuggeschwindigkeit und/oder eine Kurvenfahrt betreffen, insbesondere einen Kurvenradius. Der Kurvenradius kann eine Kurve betreffen, durch welche das Schienenfahrzeug gerade fährt. Es kann vorgesehen sein, dass zur Bestimmung eines Kurvenradius geeignete Beschleunigungssensoren und/oder Neigungssensoren vorgesehen sind. Es ist vorstellbar, dass ein Kurvenradius mit Bezug auf einen Wagenkasten und/oder ein Drehgestell erfasst wird, so dass je nach Streckenführung unterschiedliche Kurvenradien für unterschiedliche Teile des Schienenfahrzeugs erfassbar und als entsprechende Kurvendaten bereitstellbar sind.

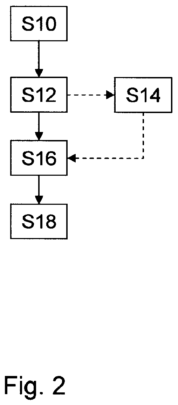

In Figur 2 ist schematisch ein Flussdiagramm für ein Verfahren zum Bestimmen eines Kraftschlusses dargestellt. Das Verfahren kann von einer Steuereinrichtung durchgeführt werden, insbesondere von einer mit Bezug auf Figur 1 beschriebenen Steuereinrichtung. Das Schienenfahrzeug kann ein mit Bezug auf Figur 1 beschriebenes Schienenfahrzeug sein. In einem Schritt S10 erfasst eine Sensoreinrichtung einer Schlingerdämpfungseinrichtung Querbewegungsdaten von Schlingerdämpfern der Schlingerdämpfungseinrichtung. In einem Schritt S12 empfängt eine Steuereinrichtung die Querbewegungsdaten von der Sensoreinrichtung. Es kann vorgesehen sein, dass in einem optionalen Schritt S14 die Steuereinrichtung Bremsdaten und/oder Radlagerdaten und/oder Daten bezüglich weiterer Parameter empfängt. Der Schritt S14 kann vor, nach oder parallel zum Schritt S12 ausgeführt werden. In einem auf den Schritt S12 und gegebenenfalls S14 nachfolgenden Schritt S16 bestimmt die Steuereinrichtung basierend auf Querbewegungsdaten den Kraftschluss. Dabei kann die Steuereinrichtung Bremsdaten und/oder Radlagerdaten und/oder weitere Parameter berücksichtigen. Es kann vorgesehen sein, dass die Steuereinrichtung in einem Schritt S18 Daten bezüglich des Kraftschlusses für andere Steuereinrichtungen bereitstellt und/oder basierend auf derartigen Daten eine Ansteuerung des Schienenfahrzeugs durchführt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Schienenfahrzeug
- 12: Drehgestell
- 13: weiteres Drehgestell
- 14: Wagenkasten
- 16: Wagenkasten
- 18: Radachse
- 20: Radachse
- 22: Schlingerdämpfungseinrichtung
- 24: Sensoreinrichtung
- 26: Steuereinrichtung
- 28: Bremssensoreinrichtung
- 30: Radlagersensoreinrichtung
- 32: Weitere Einrichtungen

## Patentansprüche

1. Steuereinrichtung (26) für ein Schienenfahrzeug (10), wobei die Steuereinrichtung (26) zum Empfang von Querbewegungsdaten mit einer Sensoreinrichtung (24) verbunden oder verbindbar ist, welche mindestens einer Schlingerdämpfungseinrichtung (22) des Schienenfahrzeugs (10) zugeordnet ist, verbunden oder verbindbar ist, und wobei die Steuereinrichtung (26) dazu ausgebildet ist, basierend auf empfangenen Querbewegungsdaten einen Kraftschluss zwischen mindestens einem Rad und einer Schiene zu ermitteln.

2. Steuereinrichtung (26) nach Anspruch 1, wobei die Sensoreinrichtung (24) Sensoren aufweist, welche Querbewegungsdaten bezüglich einer relativen Querbewegung von Wagenkästen (14; 16) und/oder Drehgestellen (12; 13) des Schienenfahrzeugs (10) bereitzustellen vermögen.

3. Steuereinrichtung (26) nach einem der vorhergehenden Ansprüche, wobei die Steuereinrichtung (26) dazu ausgebildet ist, den Kraftschluss basierend auf mindestens einem weiteren Parameter zu ermitteln.

4. Steuereinrichtung (26) nach Anspruch 3, wobei der mindestens eine weitere Parameter einen Kurvenradius umfasst.

5. Steuereinrichtung (26) nach Anspruch 3 oder 4, wobei der mindestens eine weitere Parameter eine Fahrzeuggeschwindigkeit umfasst.

6. Steuereinrichtung (26) nach einem der vorhergehenden Ansprüche, wobei die Steuereinrichtung (26) zum Empfang von Radlagerdaten ausgebildet ist.

7. Steuereinrichtung (26) nach einem der vorhergehenden Ansprüche, wobei die Steuereinrichtung (26) zum Empfang von Bremsdaten ausgebildet ist.

8. Schienenfahrzeug (10) mit einer Steuereinrichtung (26) nach einem der Ansprüche 1 bis 7.

9. Verfahren zum Ermitteln eines Kraftschlusses zwischen mindestens einem Rad eines Schienenfahrzeugs (10) und einer Schiene, mit den Schritten:
- Empfangen, durch eine Steuereinrichtung (26), von Querbewegungsdaten von einer Sensoreinrichtung (24), welche mindestens einer Schlingerdämpfungseinrichtung (22) des Schienenfahrzeugs (10) zugeordnet ist;
- Ermitteln, durch die Steuereinrichtung (26), des Kraftschlusses basierend auf den empfangenen Querbewegungsdaten.

## Claims

1. Control unit (26) for a rail vehicle (10), wherein the control unit (26) can be or is connected to a sensor device (24) assigned to at least one roll damping device (22) of the rail vehicle (10) for the reception of transverse motion data and wherein the control unit (26) is designed to detect a frictional connection between at least one wheel and a rail on the basis of received transverse motion data.

2. Control unit (26) according to claim 1, wherein the sensor device (24) comprises sensors capable of providing transverse motion data relating to a relative transverse motion of carriage bodies (14; 16) and/or bogies (12; 13) of the rail vehicle (10).

3. Control unit (26) according to any of the preceding claims, wherein the control unit (26) is designed to detect the frictional connection on the basis of at least one further parameter.

4. Control unit (26) according to claim 3, wherein the at least one further parameter comprises a curve radius.

5. Control unit (26) according to claim 3 or 4, wherein the at least one further parameter comprises a vehicle speed.

6. Control unit (26) according to any of the preceding claims, wherein the control unit (26) is designed to receive wheel bearing data.

7. Control unit (26) according to any of the preceding claims, wherein the control unit (26) is designed to receive brake data.

8. Rail vehicle (10) with a control unit (26) according to any of claims 1 to 7.

9. Method for detecting a frictional connection between at least one wheel of a rail vehicle (10) and a rail, the method comprising the steps of:
- the reception, by a control device (26), of transverse motion data from a sensor device (24) assigned to at least one roll damping device (22) of the rail vehicle (10);
- the determination of the frictional connection by the control device (26) on the basis of the received transverse motion data.

## Revendications

1. Dispositif (26) de commande pour un véhicule (10) ferroviaire, le dispositif (26) de commande étant, pour la réception de données de déplacement transversal, relié à un dispositif (24) capteur ou pouvant l'être, qui est associé et relié ou peut être relié à au moins un dispositif (22) d'amortissement du lacet du véhicule (10) ferroviaire et dans lequel le dispositif (26) de commande est constitué pour, sur la base de données de déplacement transversal reçues, déterminer une adhérence entre au moins une roue et un rail.

2. Dispositif (26) de commande suivant la revendication 1, dans lequel le dispositif (24) capteur a des capteurs, qui peuvent mettre à disposition des données de déplacement transversal concernant un mouvement transversal relatif de caisses (14 ; 16) ou de boggies (12, 13) du véhicule (10) ferroviaire.

3. Dispositif (26) de commande suivant l'une des revendications précédentes, dans lequel le dispositif (26) de commande est constitué pour déterminer l'adhérence sur la base d'au moins un autre paramètre.

4. Dispositif (26) de commande suivant la revendication 3, dans lequel le au moins un autre paramètre comprend un rayon en courbe.

5. Dispositif (26) de commande suivant la revendication 3 ou 4, dans lequel le au moins un autre paramètre comprend une vitesse du véhicule.

6. Dispositif (26) de commande suivant l'une des revendications précédentes, dans lequel le dispositif (26) de commande est constitué pour la réception de données de palier de roue.

7. Dispositif (26) de commande suivant l'une des revendications précédentes, dans lequel le dispositif (26) de commande est constitué pour la réception de données de frein.

8. Véhicule (10) ferroviaire comprenant un dispositif (26) de commande suivant l'une des revendications 1 à 7.

9. Procédé de détermination d'une adhérence entre au moins une roue d'un véhicule (10) ferroviaire et un rail, comprenant les stades :
- réception par un dispositif (26) de commande de données de déplacement transversal d'un dispositif (24) de capteur, qui est associé au moins à un dispositif (22) d'amortissement du lacet du véhicule (10) ferroviaire ;
- détermination par le dispositif (26) de l'adhérence sur la base des données de mouvement transversal reçues.
